# EUROPÄISCHE PATENTSCHRIFT

(11) **EP 4 008 621 B1**
(45) Veröffentlichungstag und Bekanntmachung des Hinweises auf die Patenterteilung: **23.10.2024**
(21) Anmeldenummer: 21020547.2
(22) Anmeldetag: 04.11.2021
(51) Int. Cl.: B62M 9/10, F16H 55/30

(54) **MEHRFACHRITZELANORDNUNG FÜR FAHRRÄDER**
MULTI-SPROCKET ASSEMBLY FOR BICYCLES
AGENCEMENT DE PIGNON MULTIPLE POUR BICYCLETTES

(30) Priorität: 01.12.2020 DE 102020131862
(43) Veröffentlichungstag der Anmeldung: 08.06.2022
(73) Patentinhaber: SRAM Deutschland GmbH, 97424 Schweinfurt (DE)
(72) Erfinder: Geist, Peter, 10119 Berlin (DE); Boughton, David, 97082 Würzburg (DE)

(56) Entgegenhaltungen:
- EP-A1- 2 487 100
- DE-U1- 202013 101 728

## Beschreibung

### Technisches Gebiet

Die vorliegende Erfindung betrifft eine Mehrfach-Ritzelanordnung für Fahrräder. Eine solche Mehrfach-Ritzelanordnung kann an einer Hinterradachsanordnung eines Fahrrads befestigt werden. Zudem betrifft die vorliegende Erfindung eine Hinterradachsanordnung eines Fahrrads mit einer solchen Mehrfach-Ritzelanordnung.

### Hintergrund

Ein Fahrrad kann mit einer Antriebsanordnung, wie z.B. einem Kettenantrieb, ausgestattet sein. Fahrrad-Antriebsanordnungen können dazu dienen, das Drehmoment von einem Fahrer auf ein hinteres Laufrad des Fahrrads zu übertragen, um das Fahrrad anzutreiben. Eine Antriebsanordnung kann zum Beispiel das Drehmoment von einer vorderen Kettenradanordnung über eine Kette auf ein hinteres Kettenrad übertragen, um ein hinteres Laufrad anzutreiben. Eine solche Antriebsanordnung kann als Antriebsstrang bezeichnet werden.

Kettenradbaugruppen für Fahrräder können ein Kettenrad oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Mehrfach-Ritzelanordnung, Ritzelanordnung, Kassette, Ritzelkassette oder Ritzelpaket bezeichnet werden. Eine solche Mehrfach-Ritzelanordnung oder Kassette ist typischerweise so konfiguriert, dass sie an einem Freilaufkörper eines hinteren Laufrades befestigt werden kann. Die Antriebsanordnung kann ferner ein hinteres Schaltwerk umfassen, mit dem die Kette zwischen den einzelnen Ritzeln der Mehrfach-Ritzelanordnung geschaltet werden kann. Mit dem Schaltwerk können somit verschiedene Gangstufen oder Gänge eingelegt werden, wobei die jeweilige Gangstufe davon abhängt, an welchem Ritzel der Mehrfach-Ritzelanordnung sich die Kette befindet.

Mehrfach-Ritzelanordnungen sind beispielsweise aus US 10 112 681 B2 oder EP 2 319 752 A2 bekannt. Dokument EP2487100A1 zeigt die Präambel des Anspruchs 1.

### Abriss

Es ist eine Aufgabe der vorliegenden Erfindung, eine Mehrfach-Ritzelanordnung bereitzustellen, mit der die im Betrieb der Mehrfach-Ritzelanordnung auftretenden Geräusche reduziert werden können.

Diese Aufgabe wird mit einer Mehrfach-Ritzelanordnung mit den Merkmalen des Anspruchs 1 gelöst. Weitere Ausführungsformen sind in den beigefügten abhängigen Ansprüchen angegeben.

Die Mehrfach-Ritzelanordnung zur Befestigung an einer Hinterradachsanordnung eines Fahrrads umfasst wenigstens ein erstes Ritzel, wenigstens ein zweites Ritzel, und wenigstens einen Dämpfungskörper. Der wenigstens eine Dämpfungskörper erstreckt sich ausgehend von dem wenigstens einen ersten Ritzel in Richtung des wenigstens einen zweiten Ritzels, wobei sich der wenigstens eine Dämpfungskörper zumindest an eine axiale Seitenfläche des ersten Ritzels anlegt.

Der wenigstens eine Dämpfungskörper dient zur Verbesserung der Akustik der Mehrfach-Ritzelanordnung. Der wenigstens eine Dämpfungskörper verbessert die Akustik dadurch, dass Schwingungen und/oder Schall mit dem wenigstens einen Dämpfungskörper gedämpft werden können. Der wenigstens eine Dämpfungskörper steht zur Schwingungs-/oder Schalldämpfung zumindest mit einer axialen Seitenfläche eines Ritzels der Mehrfach-Ritzelanordnung in Kontakt.

Der wenigstens eine Dämpfungskörper kann sich zumindest an der axialen Seitenfläche des ersten Ritzels abstützen. Der wenigstens eine Dämpfungskörper kann zumindest an der axialen Seitenfläche des ersten Ritzels angebracht sein.

Der wenigstens eine Dämpfungskörper kann das wenigstens eine zweite Ritzel zumindest in radialer Richtung kontaktieren. Der wenigstens eine Dämpfungskörper kann sich zumindest an einem weiteren Ritzel der Mehrfach-Ritzelanordnung in radialer Richtung abstützen, wobei das zumindest eine weitere Ritzel ein dem ersten Ritzel benachbartes Ritzel oder ein von dem ersten Ritzel in axialer Richtung weiter entferntes Ritzel sein kann. Der wenigstens eine Dämpfungskörper kann einen radial inneren Rand oder eine radial innere Fläche des entsprechenden Ritzels zumindest abschnittsweise kontaktieren. Der radiale Kontakt zwischen dem wenigstens Dämpfungskörper und dem wenigstens einen zweiten Ritzel kann zur Zentrierung des wenigstens einen Dämpfungskörpers bei der Montage beitragen.

Der wenigstens eine Dämpfungskörper kann sich in axialer Richtung zumindest an den einander zugewandten axialen Seitenflächen des ersten Ritzels und des zweiten Ritzels abstützen. Der wenigstens eine Dämpfungskörper kann sich neben dem ersten Ritzel und dem zweiten Ritzel auch an einem weiteren Ritzel und/oder einer Ritzelbaugruppe der Mehrfach-Ritzelanordnung abstützen. Es ist auch denkbar, dass sich der wenigstens eine Dämpfungskörper an einer weiteren Komponente, wie zum Beispiel einem Verschlusskörper, der Mehrfach-Ritzelanordnung abstützt. Der wenigstens eine Dämpfungskörper kann sich insbesondere in axialer Richtung zumindest an den axialen Seitenflächen des ersten Ritzels und des zweiten Ritzels abstützen. Der wenigstens eine Dämpfungskörper kann axiale Seitenflächen und/oder axialen Stirnflächen aufweisen, mit denen er sich an den axialen Seitenflächen der Ritzel abstützen kann.

Das erste Ritzel und das zweiten Ritzel können Ritzel sein, die in axialer Richtung in einem mittleren Bereich der Mehrfach-Ritzelanordnung angeordnet sind. Das wenigstens eine erste Ritzel kann einen Durchmesser haben, der kleiner als der Durchmesser des größten Ritzels, aber größer als der Durchmesser des kleinsten Ritzels ist. Das zweite Ritzel kann einen Durchmesser haben, der größer oder kleiner als der Durchmesser des ersten Ritzels ist.

Zumindest das wenigstens eine erste Ritzel der Mehrfach-Ritzelanordnung kann zur drehmomentübertragenden Kopplung der Mehrfach-Ritzelanordnung mit der Hinterachse des Fahrrads ausgebildet sein. Zumindest über das wenigstens eine erste Ritzel kann sich die Mehrfach-Ritzelanordnung an der Hinterachse des Fahrrads abstützen. Das wenigstens eine erste Ritzel kann beispielsweise mit einem Antreiberkörper an der Hinterachse des Fahrrads drehmomentübertragend koppelbar sein und sich an diesem Antreiberkörper abstützen. Es ist jedoch auch denkbar, dass mehrere Ritzel der Mehrfach-Ritzelanordnung drehmomentübertragend mit der Hinterachse des Fahrrads und insbesondere mit einem Antreiberkörper koppelbar sind.

Das wenigstens eine erste Ritzel kann ein Abschlussritzel der Mehrfach-Ritzelanordnung bilden. In diesem Fall kann das wenigstens eine erste Ritzel das größte Ritzel, d. h. das Ritzel mit der größten Zahnanzahl und/oder dem größten Durchmesser sein. Ein solches Abschlussritzel kann die Mehrfach-Ritzelanordnung mit der Hinterradachsanordnung des Fahrrads drehmomentübertragend koppeln. Die Mehrfach-Ritzelanordnung kann sich über das Abschlussritzel in radialer Richtung an der Hinterradachsanordnung des Fahrrads abstützen.

Der wenigstens eine Dämpfungskörper kann zwischen dem wenigstens einen ersten Ritzel und dem wenigstens einen zweiten Ritzel über einen Presssitz gehalten werden. Der wenigstens eine Dämpfungskörper kann in axialer Richtung ein Übermaß aufweisen. Die axiale Erstreckung des Dämpfungskörpers kann größer als der axiale Abstand der axialen Seitenflächen des ersten Ritzels und des zweiten Ritzels sein. Bei der Montage wird der wenigstens eine Dämpfungskörper eingesetzt, bevor das erste Ritzel und das zweite Ritzel beispielsweise über Stifte oder Bolzen miteinander verbunden werden. Der Dämpfungskörper wird dementsprechend bei der Verbindung des ersten Ritzels und des zweiten Ritzels zusammengedrückt bzw. komprimiert, sodass er zwischen dem ersten Ritzel und dem zweiten Ritzel über einen Presssitz gehalten wird.

Der wenigstens eine Dämpfungskörper weist in radialer Richtung ein Übermaß auf.

Beispielsweise kann der Außendurchmesser des wenigstens einen Dämpfungskörpers zumindest bereichsweise größer sein, als der Innendurchmesser wenigstens eines Ritzels der Mehrfach-Ritzelanordnung.

Der wenigstens eine Dämpfungskörper kann mit dem ersten Ritzel und/oder dem zweiten Ritzel dauerhaft fest verbunden sein. Bei einer dauerhaft festen Verbindung des Dämpfungskörpers mit dem ersten Ritzel und/oder dem zweiten Ritzel kann ein Kontaktfläche zwischen dem Dämpfungskörper und wenigstens einem von ersten Ritzel oder zweiten Ritzel vergrößert werden, sodass die Dämpfungswirkung des wenigstens einen Dämpfungskörper weiter verstärkt werden kann.

Der wenigstens eine Dämpfungskörper kann mit dem ersten Ritzel und/oder dem zweiten Ritzel verklebt sein. Der wenigstens eine Dämpfungskörper kann beispielsweise mit einer axialen Seitenfläche des ersten Ritzels verklebt sein und sich ausgehend von dieser axialen Seitenfläche in Richtung einer axialen Seitenfläche des zweiten Ritzels erstrecken. In diesem Fall kann der wenigstens eine Dämpfungskörper nur an der axialen Seitenfläche des wenigstens einen ersten Ritzels befestigt sein. Es ist auch denkbar, dass der Dämpfungskörper nur die axiale Seitenfläche des ersten Ritzels kontaktiert. Ferner kann der wenigstens eine Dämpfungskörper mit den axialen Seitenflächen des ersten Ritzels und des zweiten Ritzels verklebt sein. Der wenigstens eine Dämpfungskörper kann beispielsweise mit einer axialen Seitenfläche des ersten Ritzels verklebt sein und sich ausgehend von dieser axialen Seitenfläche in Richtung eines radial inneren Rands oder einer radial inneren Fläche des zweiten Ritzels erstrecken. Der wenigstens eine Dämpfungskörper kann sich an diesen radial inneren Rand oder diese radial innere Fläche zumindest abschnittsweise anlegen. Der wenigstens eine Dämpfungskörper kann sich beispielsweise mit seiner radial äußeren Fläche an den radial inneren Rand oder die radial innere Fläche des zweiten Ritzels anlegen.

Das wenigstens eine erste Ritzel kann einen Zahnring, eine Koppelöffnung und einen Verbindungsbereich aufweisen, der den Zahnring mit der Koppelöffnung verbindet. Die Koppelöffnung kann zur drehmomentübertragenden Kopplung der Mehrfach-Ritzelanordnung mit einer Hinterradachse des Fahrrads ausgebildet sein. Die Koppelöffnung kann dazu eine Drehmomentübertragungskontur haben, die mit einer komplementären Kontur an der Hinterradachsanordnung bzw. einem Antreiberkörper der Hinterradachsanordnung gekoppelt werden kann. Der Zahnring erstreckt sich radial außen um die Koppelöffnung herum und wird über den Verbindungsbereich mit der Koppelöffnung verbunden. Der Verbindungsbereich zwischen dem Zahnring und der Koppelöffnung kann von einem Ritzelarm oder mehreren Ritzelarmen gebildet werden.

Der wenigstens eine Dämpfungskörper kann an dem Zahnring des ersten Ritzels angeordnet sein. Der wenigstens eine Dämpfungskörper kann in diesem Fall an einem radial äußeren Bereich (aber radial innerhalb der Zähne des Ritzels) des ersten Ritzels angeordnet sein. Das zweite Ritzel kann beispielsweise das nächstkleinere Ritzel sein. Der wenigstens eine Dämpfungskörper kann zwischen dem ersten Ritzel und dem zweiten Ritzel angeordnet sein, das von dem nächstkleineren Ritzel gebildet wird.

Der wenigstens eine Dämpfungskörper kann an dem Verbindungsbereich des ersten Ritzels angeordnet sein. Der Verbindungsbereich kann sich radial innerhalb des Zahnrings befinden. Der wenigstens eine Dämpfungskörper kann in radialer Richtung zwischen dem Zahnring und der Koppelöffnung des ersten Ritzels angeordnet sein. Der wenigstens eine Dämpfungskörper kann in einem mittleren Bereich der radialen Erstreckung des ersten Ritzels angeordnet sein. Der wenigstens eine Dämpfungskörper kann sich ausgehend von dem Verbindungsbereich des ersten Ritzels in Richtung des zweiten Ritzels erstrecken, das sich in axialer Richtung in einem mittleren Bereich der Mehrfach-Ritzelanordnung befindet bzw. eines der mittelgroßen Ritzel der Mehrfach-Ritzelanordnung darstellt. Die wenigstens eine Kontaktfläche zwischen dem Dämpfungskörper und dem ersten Ritzel und/oder dem Dämpfungskörper und dem zweiten Ritzel kann vergrößert werden, sodass die Dämpfungswirkung des wenigstens einen Dämpfungskörpers weiter verstärkt werden kann. Zudem können Verschmutzungen durch die Kette in radialer Richtung nach innen der Mehrfach-Ritzelanordnung heraus gedrückt werden, wodurch Schaltfehler aufgrund von Fremdkörpern vermieden werden können. Der in radialer Richtung weiter innen angeordnete Dämpfungskörper kann vor mechanischen Belastungen von außen, wie zum Beispiel aufgrund eines Hochdruckreinigers, oder aufgrund von Fremdkörpern/Schmutz geschützt werden.

Der wenigstens eine Dämpfungskörper kann sich in axialer Richtung entlang zumindest eines weiteren Ritzels zu dem zweiten Ritzel erstrecken. Der wenigstens eine Dämpfungskörper kann sich ausgehend von dem ersten Ritzel radial innerhalb des zumindest einen weiteren Ritzels zu dem zweiten Ritzel erstrecken. Der wenigstens eine Dämpfungskörper kann derart ausgebildet sein, dass er das zumindest eine weitere Ritzel nicht kontaktiert.

Der wenigstens eine Dämpfungskörper kann ringförmig ausgebildet sein. Der wenigstens eine Dämpfungskörper kann axiale Seitenflächen und/oder axiale Stirnflächen aufweisen. Der wenigstens eine Dämpfungskörper kann eine vorbestimmte axiale Erstreckung aufweisen.

Der wenigstens eine Dämpfungskörper kann wenigstens eine radial äußere Fläche und wenigstens eine radial innere Fläche aufweisen. Die radial innere Fläche und/oder die radial äußere Fläche des wenigstens einen Dämpfungskörpers können zumindest mit dem wenigstens einen zweiten Ritzel oder einer weiteren Komponente der Mehrfach-Ritzelanordnung in radialer Richtung in Kontakt stehen. Es kann ein durchgängiger oder abschnittweiser radialer Kontakt zwischen der radial inneren Fläche und/oder der radial äußeren Fläche des wenigstens einen Dämpfungskörpers und dem wenigstens einen zweiten Ritzel oder einer weiteren Komponente der Mehrfach-Ritzelanordnung vorliegen.

Es ist ferner auch denkbar, dass die wenigstens eine radial äußere Fläche und die wenigstens eine radial innere Fläche nicht oder nur bereichsweise mit der Mehrfach-Ritzelanordnung oder einem Ritzel in Kontakt stehen. Ein durchgängiger oder flächiger Kontakt kann in diesem Fall nur zwischen dem wenigstens einen Dämpfungskörper und zumindest einer axialen Seitenfläche des ersten Ritzels und/oder des zweiten Ritzels vorliegen.

Der wenigstens eine Dämpfungskörper kann an wenigstens einer radial äußeren Fläche oder einem radial äußeren Rand und/oder an wenigstens einer radial inneren Fläche oder einem radial inneren Rand wenigstens eine Aussparung aufweisen. Die wenigstens eine Aussparung kann beispielsweise für die Bolzen zur Verbindung zweier benachbarter Ritzel vorgesehen sein. Der wenigstens eine Dämpfungskörper kann sich im Bereich der Aussparungen an die Bolzen anlegen. Ferner kann die wenigstens eine Aussparung an der radial inneren Fläche des wenigstens einen Dämpfungskörpers für einen der Ritzelarme vorgesehen sein.

Der wenigstens eine Dämpfungskörper kann aus einem elastischen Kunststoff oder aus einem elastischen Kunststoffschaum hergestellt sein. Der wenigstens eine Dämpfungskörper kann beispielsweise aus einem Polyurethanschaum hergestellt sein. Der Dämpfungskörper kann beispielsweise aus einem Kunststoffschaum hergestellt sein, der unter dem Namen Cellasto^{®} vertrieben wird. Der Dämpfungskörper kann beispielsweise auch aus einem Kunststoff hergestellt sein, der unter dem Namen Sylomer^{®} vertrieben wird. Der Kunststoffschaum kann geschlossenzellig ausgeführt sein, um die Aufnahme von Feuchtigkeit und Schmutz zu verringern.

Die Mehrfach-Ritzelanordnung kann sich aus mehreren Einzelritzeln zusammensetzen, die über Stifte oder Bolzen miteinander verbunden sind. Die Mehrfach-Ritzelanordnung kann auch Ritzelbaugruppen von einstückig miteinander ausgebildeten Ritzeln oder miteinander verschweißten Ritzeln aufweisen. Beispielsweise können die kleinsten Ritzel einer Mehrfach-Ritzelanordnung eine solche Ritzelbaugruppe bilden. Diese Ritzelbaugruppen können mit Einzelritzeln oder einer weiteren Ritzelbaugruppe über Bolzen oder Stifte verbunden sein. Ferner kann nur das Abschlussritzel der Mehrfach-Ritzelanordnung als Einzelritzel ausgeführt sein und die übrigen Ritzel der Mehrfach-Ritzelanordnung eine Ritzelbaugruppe der voranstehend beschriebenen Art bilden.

Die vorliegende Erfindung betrifft ferner eine Hinterradanordnung für ein Fahrrad. Die Hinterradanordnung umfasst ein Hinterrad mit einer Hinterradachse, die zur Befestigung an einem Fahrradrahmen ausgebildet ist, einen an der Hinterradachse drehbar gelagerten Antreiberkörper, und eine Mehrfach-Ritzelanordnung der voranstehend beschriebenen Art, die mit dem Antreiberkörper in einer Antriebsrichtung koppelbar.

Der Antreiberkörper kann über eine Freilaufeinrichung mit der Hinterradachse gekoppelt sein. Der Antreiberkörper kann auch als "Freilaufkörper" bezeichnet werden.

Die Speichen und/oder die Composite-Oberflächen eines Hinterrads können zur Entstehung von Schwingungen und/oder Schallabstrahlungen beitragen, die zu unerwünschten Geräuschen bei der Fahrt mit einem Fahrrad führen können. Auch der Luftdruck der Hinterradreifen kann einen Anteil an der Entwicklung dieser unerwünschten Geräusche haben. Mit dem wenigstens einen Dämpfungskörper bzw. mit der vorstehend genannten Hinterradanordnung können derartige Schwingungen und/oder Schallabstrahlungen gedämpft und damit die unerwünschten Geräusche verhindert werden.

### Kurze Beschreibung der Figuren

Im Folgenden werden beispielhafte Ausführungsformen der Erfindung mit Bezug auf die beigefügten Figuren beschrieben. Es stellen dar:
- Figur 1: eine schematische Ansicht eines Fahrrads;
- Figur 2: eine Draufsicht auf eine Mehrfach-Ritzelanordnung gemäß einer Ausführungsform;
- Figur 3: eine Schnittansicht entlang der Schnittlinie II-II in Figur 2;
- Figur 4: eine Schnittansicht entlang der Schnittlinie III-III in Figur 3;
- Figur 5: eine teilweise aufgebrochene perspektivische Ansicht der Ritzelanordnung gemäß der Figuren 2 bis 4;
- Figur 6: eine Ansicht eines vergrößerten Ausschnitts aus Figur 5;
- Figur 7: eine Schnittansicht einer Mehrfach-Ritzelanordnung gemäß einer weiteren Ausführungsform; und
- Figur 8: eine teilweise aufgebrochene perspektivische Ansicht der Mehrfach-Ritzelanordnung gemäß Figur 7.

### Detaillierte Beschreibung

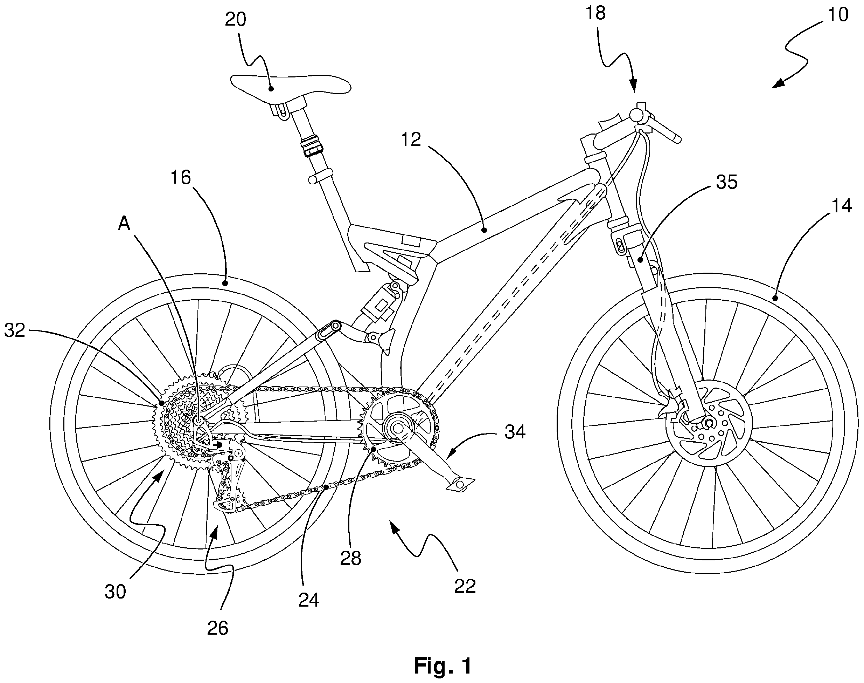

Figur 1 zeigt exemplarisch ein Fahrrad 10. Das Fahrrad 10 umfasst einen Fahrradrahmen 12, ein Vorderrad 14, ein Hinterrad 16, einen Lenker 18, einen Sattel 20 und eine Antriebsanordnung 22. Die Antriebsanordnung 22 umfasst eine Kette 24, ein Schaltwerk 26, ein vorderes Kettenrad 28 und eine hintere Mehrfach-Ritzelanordnung 30 mit mehreren Ritzeln 32. Jedes Ritzel 32 hat an seinem Außenumfang eine Mehrzahl an Zähnen, die mit der Kette 24 in Eingriff gebracht werden können. Das vordere Kettenrad 28 ist mit einer Kurbelanordnung 34 verbunden. An der Kurbelanordnung 34 sind Pedale vorgesehen.

Die im Folgenden verwendeten Richtungsangaben rechts/links und vorne/hinten beziehen sich auf ein Fahrrad 10 in Fahrtrichtung, entsprechen also der Fahrerperspektive auf dem Fahrrad 10.

Das Vorderrad 14 ist über eine Vorderradgabel 35 mit dem Fahrradrahmen 12 gekoppelt. Die Vorderradgabel 35 ist mit dem Lenker 16 verbunden. Der Fahrradrahmen 12 hat typischerweise ein linkes und ein rechtes hinteres Ausfallende oder Rahmenauge, zwischen denen das Hinterrad 16 montiert ist. Das Hinterrad 16 dreht sich zusammen mit der Mehrfach-Ritzelanordnung 30 um die Drehachse A. Der Begriff "axial" bezieht sich hier auf die Drehachse Ader Mehrfach-Ritzelanordnung 30 oder eine hierzu parallele Richtung, die in Fig. 1 senkrecht zur Zeichenebene verläuft. Der Durchmesser der Ritzel 32 nimmt in axialer Richtung der Achse A nach außen ab, d.h. das größte Ritzel ist axial weiter innen als die kleineren Ritzel. Die vorstehenden Erläuterungen beziehen sich auf ein Fahrrad sowohl mit einer bekannten wie auch mit einer erfindungsgemäßen Ritzelanordnung.

Die Mehrfach-Ritzelanordnung 30 ist mit einem Antreiberkörper (nicht gezeigt) der Achsanordnung an dem Hinterrad 16 des Fahrrads 10 drehmomentübertragend gekoppelt und an diesem Antreiberkörper befestigt. Über die Mehrfach-Ritzelanordnung 30 kann ein Drehmoment auf die Achsanordnung an dem Hinterrad 16 und damit auf das Hinterrad 16 des Fahrrads 10 übertragen werden. Das Schaltwerk 26 kann die Kette 24 zwischen den einzelnen Ritzeln 32 der Mehrfach-Ritzelanordnung 30 verlagern, d. h. die Kette 24 kann mittels des Schaltwerks 26 von einem Ritzel 32 zum nächsten bewegt werden. Mit dem Schaltwerk 26 können somit verschiedene Gangstufen oder Gänge eingelegt werden, wobei die jeweilige Gangstufe davon abhängt, an welchem Ritzel 32 der Mehrfach-Ritzelanordnung 30 sich die Kette 24 befindet.

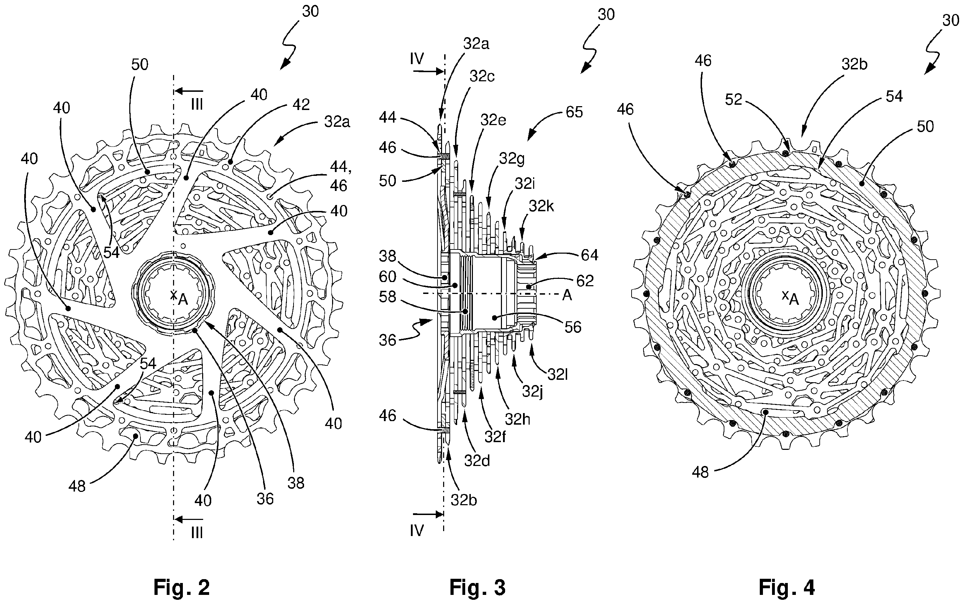

Die Figuren 2, 3 und 4 zeigen verschiedene Ansichten einer Mehrfach-Ritzelanordnung 30 gemäß einer ersten Ausführungsform, wobei Figur 3 eine Schnittansicht entlang der Schnittlinie III-III in Figur 2 und Figur 4 eine Schnittansicht entlang der Schnittlinie IV-IV in Figur 3 zeigt. Die Mehrfach-Ritzelanordnung 30 weist ein Abschlussritzel 32a auf. Das Abschlussritzel 32a dient zur Drehmomentübertragung von der Mehrfach-Ritzelanordnung 30 auf die Achsanordnung an dem Hinterrad 14 (siehe Figur 1). Über das Abschlussritzel 32a kann sich die Mehrfach-Ritzelanordnung 30 an der Hinterradachse abstützen. Das Abschlussritzel 32a stellt das Ritzel mit dem größten Durchmesser der Mehrfach-Ritzelanordnung 30 dar. An das Abschlussritzel 32a schließen sich mehrere weitere Ritzel 32b bis 32l an (siehe Figur 3). Der Durchmesser der Ritzel 32b bis 32l reduziert sich ausgehend von dem Abschlussritzel 32a in axialer Richtung nach außen.

Das Abschlussritzel 32a hat eine Koppelöffnung 36, mit der die Mehrfach-Ritzelanordnung 30 auf eine Achsanordnung an dem Hinterrad 16 aufgesteckt werden kann. Die Koppelöffnung 36 weist an ihrem Innenumfang eine Drehmomentübertragungskontur auf, über die die Mehrfach-Ritzelanordnung 30 drehmomentübertragend mit einem Antreiberkörper (nicht gezeigt) der Achsanordnung an dem Hinterrad 16 gekoppelt werden kann. Die Drehmomentübertragungskontur umfasst mehrere Vorsprünge 38, die sich in radialer Richtung nach innen erstrecken. Der Antreiberkörper der Achsanordnung an dem Hinterrad 16 hat an seiner Außenfläche eine Kontur, die zu der Drehmomentübertragungskontur an der Koppelöffnung 36 des Abschlussritzels 32a komplementär ausgebildet ist. Das Abschlussritzel 32a weist ferner Ritzelarme 40 auf, die sich zwischen der Koppelöffnung 36 und einem Zahnring 42 mit den Ritzelzähnen am Außenumfang erstrecken. Die Ritzelarme 40 verbinden die Koppelöffnung 36 mit dem radial außenliegenden Zahnring 42, d.h. die Ritzelarme 40 sind in einem Verbindungsbereich zwischen dem Zahnring 42 und der Koppelöffnung 36 ausgebildet.

In dem Zahnring 42 sind Öffnungen 44 ausgebildet, in die Stifte oder Bolzen 46 zur Verbindung mit dem nächstkleineren Ritzel 32b eingesetzt sind. Der Zahnring 42 weist ferner mehrere Öffnungen 48 auf. Die Öffnungen 48 tragen unter anderem zur Gewichtsersparnis 30 bei. Wie in den Figuren 2 und 4 erkennbar ist, weisen mehrere der Ritzel 32b bis 32l identische oder ähnliche Öffnungen 48 auf. Die Öffnungen 48 sind zwischen den Öffnungen 44 für die Bolzen 46 ausgebildet.

Die Mehrfach-Ritzelanordnung 30 weist einen Dämpfungskörper 50 auf. Der Dämpfungskörper 50 dient zur Schwingungs- und Schalldämpfung. Durch den Dämpfungskörper 50 kann die Akustik der Mehrfach-Ritzelanordnung 30 verbessert werden, d. h. es können im Betrieb der Mehrfach-Ritzelanordnung 30 auftretende, unerwünschte Geräusche reduziert werden. Der Dämpfungskörper 50 ist zwischen dem Abschlussritzel 32a und dem nächstkleineren Ritzel 32b angeordnet. Der Dämpfungskörper 50 liegt an einer axialen Seitenfläche des Abschlussritzels 32a und an einer axialen Seitenfläche des nächstkleineren Ritzels 32b an. Die axiale Fläche des nächstkleineren Ritzels 32b ist dem Abschlussritzel 32a zugewandt. Der Dämpfungskörper 50 steht in radialer Richtung nach innen über den Zahnring 42 des Abschlussritzels 32a vor.

Die Form des Dämpfungskörpers 50 ist insbesondere in Figur 4 erkennbar, in welcher der Dämpfungskörper 50 entlang der Schnittlinie IV-IV gemäß Figur 3 geschnitten dargestellt ist. Der Dämpfungskörper 50 ist im Wesentlichen ringförmig ausgebildet. Der Dämpfungskörper 50 erstreckt sich entlang des Ritzels 32b. Die radiale Erstreckung des Dämpfungskörpers 50 ist kleiner als die radiale Erstreckung des ringförmigen Ritzels 23b. Der Dämpfungskörper 50 liegt an dem Ritzel 32b an.

Der Dämpfungskörper 50 weist Aussparungen 52 auf, in denen sich die Bolzen 46 zur Verbindung des Abschlussritzels 32a und des Ritzels 32b erstrecken. Die Aussparungen 52 sind am radial äußeren Rand des Dämpfungskörper 50 ausgebildet. Der Dämpfungskörper 50 weist ferner weitere Aussparungen 54 auf. Die Aussparungen 54 sind am radial inneren Rand des Dämpfungskörper 50 vorgesehen. Die Aussparungen 54 sind an Positionen an dem Dämpfungskörper 50 ausgebildet, an denen sich die Ritzelarme 40 ausgehend von dem Zahnring 42 in Richtung der Koppelöffnung 36 erstrecken. Es sind gemäß dieser Ausführungsform sechs Aussparungen 54 vorgesehen, da das Abschlussritzel 32a sechs Ritzelarme 40 hat.

Der Dämpfungskörper 50 kann über einen Presssitz an der Mehrfach-Ritzelanordnung 30 befestigt sein. Bei der Montage der Mehrfach-Ritzelanordnung 30 kann der Dämpfungskörper 50 zwischen das Abschlussritzel 32a und das nächstkleineren Ritzel 32b eingesetzt und komprimiert werden. Auf diese Weise wird der Dämpfungskörper 50 über einen Presssitz an der Mehrfach-Ritzelanordnung 30 befestigt. Der Dämpfungskörper 50 hat vor der Befestigung bzw. Montage eine größere axiale Erstreckung, die größer als der axiale Abstand zwischen dem Abschlussritzel 32a und dem nächstkleineren Ritzel 32b ist. Der Dämpfungskörper 50 weist im Ausgangszustand somit ein axiales Übermaß auf, bevor er bei der Montage komprimiert wird.

Die Mehrfach-Ritzelanordnung 30 umfasst ferner einen Verschlusskörper bzw. Verschlussrohr 56. Der Verschlusskörper 56 dient zur Verbindung der Mehrfach-Ritzelanordnung 30 mit einem Antreiberkörper (nicht gezeigt), der drehbar an der Hinterradachse A gelagert ist. Der Verschlusskörper 56 weist ein Innengewinde 58 auf. Über das Innengewinde 58 kann die Mehrfach-Ritzelanordnung 30 mit dem Antreiberkörper verschraubt werden. Der Verschlusskörper 56 hat ferner einen Abschnitt 60, der das Abschlussritzel 32a kontaktiert. Im mit einem Antreiberkörper verschraubten Zustand des Verschlusskörper 56 hält der Abschnitt 60 das Abschlussritzel 32a und damit die gesamte Mehrfach-Ritzelanordnung 30 in axialer Richtung in seiner vorbestimmten Position an dem Antreiberkörper. In dieser vorbestimmten Position steht die Drehmomentübertragungskontur an der Koppelöffnung 36 des Abschlussritzels 32a mit einer komplementären Kontur an dem Antreiberkörper in drehmomentübertragenden Eingriff. Der Verschlusskörper 56 hat ferner Stützvorsprünge 62, die sich in axialer Richtung erstrecken. Die Stützvorsprünge 62 stützen die Mehrfach-Ritzelanordnung 30 in radialer Richtung ab. Dazu können die Stützvorsprünge 62 die Ritzel 32k und 32l kontaktieren. Die Stützvorsprünge 62 erstrecken sich radial innerhalb der beiden Ritzel 32k und 321. Die beiden Ritzel 32k und 32l stellen die "kleinsten" Ritzel der Mehrfach-Ritzelanordnung 30 dar, d. h. die Ritzel 32k und 32l haben die geringste Zahnanzahl der Mehrfach-Ritzelanordnung, wobei das Ritzel 32l die wenigstens Zähne hat. Im Bereich der Stützvorsprünge 62 ist am Außenumfang des Verschlusskörpers 56 eine Nut vorgesehen, in welcher ein Sprengring 64 zur axialen Fixierung des Ritzelclusters 65 auf dem Verschlusskörper 56 angeordnet ist. Der Sprengring 64 hintergreift das kleinste Ritzel 321.

Die Ritzel 32b bis 32h sind wie das Abschlussritzel 32a Einzelritzel. Das Abschlussritzel 32a und die Ritzel 32b bis 32h sind untereinander über die Bolzen 46 miteinander verbunden, wie insbesondere in Figur 3 erkennbar ist. Die Ritzel 32j, 32k und 32l können einstückig miteinander ausgebildet oder miteinander verschweißt sein. Die Ritzel 32j, 32k und 32l bilden somit eine Ritzelbaugruppe, die über Bolzen 46 mit dem benachbarten Ritzel 32i verbunden ist.

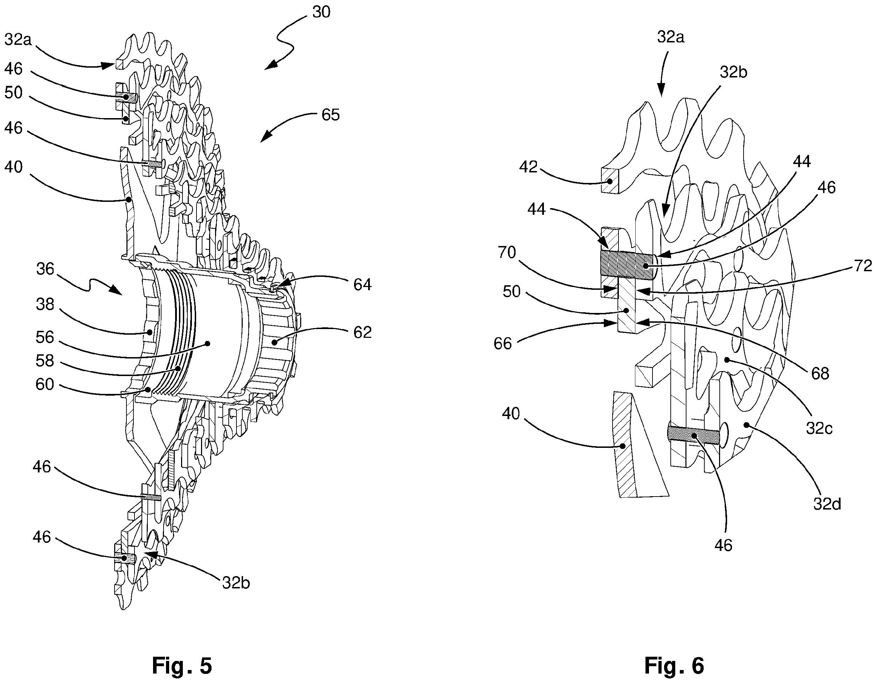

Figur 5 zeigt eine perspektivische Ansicht der Mehrfach-Ritzelanordnung 30. Der Dämpfungskörper 50 ist zwischen dem Abschlussritzel 32a und dem nächstkleineren Ritzel 32b angeordnet. Der Dämpfungskörper 50 wird über einen Presssitz zwischen dem Abschlussritzel 32a und dem Ritzel 32b gehalten. Das Abschlussritzel 32a und das Ritzel 32b stellen Einzelritzel dar, die über die Bolzen 46 miteinander verbunden sind. Der Dämpfungskörper 50 liegt mit seinem radial äußeren Rand oder seiner radial äußeren Fläche an den Bolzen 46 an.

Figur 6 zeigt einen vergrößerten Ausschnitt aus Figur 5. In Figur 6 sind insbesondere das Abschlussritzel 32a und das nächstkleineren Ritzel 32b gezeigt, die über die Bolzen 46 verbunden sind. Beide Ritzel 32a und 32b weisen jeweils Öffnungen 44 auf, durch die sich ein Bolzen 46 zur Verbindung der beiden Ritzel 32a, 32b erstreckt. Der Dämpfungskörper 50 erstreckt sich ausgehend von dem Bereich, in dem die Bolzen 46 angeordnet sind, radial nach innen. Der Dämpfungskörper 50 liegt mit den axialen Seitenflächen 66, 68 zumindest bereichsweise an der axialen Seitenfläche 70 des ersten Ritzels 32a und zumindest bereichsweise an der axialen Seitenfläche 72 des zweiten Ritzels 32b an. Die axialen Seitenflächen 70, 72 der Ritzel 32a, 32b sind einander zugewandt. Der Presssitz zur Befestigung des Dämpfungskörper 50 wird somit über die axialen Seitenflächen 70, 72 der Ritzel 32a und 32b hergestellt. Der Dämpfungskörper 50 füllt zumindest teilweise den Zwischenraum zwischen den beiden Ritzeln 32a und 32b aus.

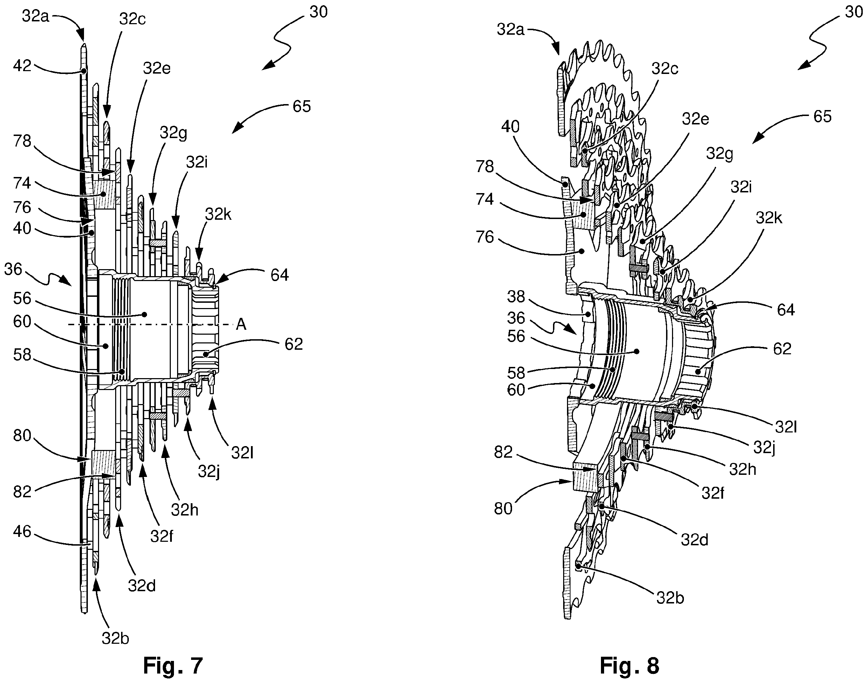

Figur 7 zeigt eine Schnittansicht einer Mehrfach-Ritzelanordnung 30 gemäß einer zweiten Ausführungsform. Figur 8 zeigt eine teilweise aufgebrochene, perspektivische Ansicht der Mehrfach-Ritzelanordnung 30 gemäß der zweiten Ausführungsform.

Die Grundstruktur der Mehrfach-Ritzelanordnung 30 gemäß der zweiten Ausführungsform entspricht der Grundstruktur der Mehrfach-Ritzelanordnung 30 gemäß der ersten Ausführungsform, die mit Bezug auf die Figuren 2 bis 6 beschrieben wurde. Die voranstehenden Ausführungen bezüglich der ersten Ausführungsform gelten somit analog auch für die Mehrfach-Ritzelanordnung 30 gemäß der zweiten Ausführungsform.

Die Mehrfach-Ritzelanordnung 30 weist einen Dämpfungskörper 74 auf. Der Dämpfungskörper 74 ist zwischen dem Abschlussritzel 32a und dem drittgrößten Ritzel 32d der Mehrfach-Ritzelanordnung 30 angeordnet, das hier das zweite Ritzel der Dämpfungsstruktur aus Abschlussritzel 32a, Dämpfungskörper 74 und Ritzel 32d bildet. Das Ritzel 32d ist eines der mittelgroßen Ritzel der Mehrfach-Ritzelanordnung 30, d. h. das Ritzel 32d ist in axialer Richtung näherungsweise in einem mittleren Bereich der Mehrfach-Ritzelanordnung 30 angeordnet. Aufgrund der Erstreckung des Dämpfungskörpers 74 näherungsweise bis in einen mittleren Bereich der Mehrfach-Ritzelanordnung 30 bzw. des Ritzelclusters 65 lassen sich akustische Schwingungen des hier aus den Ritzeln 32b bis 32j mittels der Bolzen 46 zusammengesetzten, freitragenden Ritzelclusters 65 besonders wirksam dämpfen. Dies gilt analog auch für (in den Figuren nicht dargestellte) beispielsweise einstückige oder durch Verschweißen mehrerer Ritzelringe zusammengesetzte Ritzelcluster 65.

Der Dämpfungskörper 74 erstreckt sich zwischen den einander zugewandten axialen Seitenflächen 76, 78 des Abschlussritzels 32a und des Ritzels 32d. Anders als bei der ersten Ausführungsform ist der Dämpfungskörper 74 nicht zwischen dem Abschlussritzel 32a und dem nächstkleineren Ritzel 32b, sondern zwischen dem Abschlussritzel 32a und dem Ritzel 32d angeordnet, das einen kleineren Durchmesser als das Ritzel 32b aufweist.

Der Dämpfungskörper 74 ist radial innerhalb des Zahnrings 42 des Abschlussritzels 32a angeordnet. Der Dämpfungskörper 74 ist an den Ritzelarmen 40, d. h. an dem von den Ritzelarmen 40 definierten Verbindungsbereich zwischen dem Zahnring 42 und der Koppelöffnung 36 des Abschlussritzels 32a angeordnet. Der Dämpfungskörper 74 stützt sich an den Ritzelarmen 40 ab. Der Dämpfungskörper 74 erstreckt sich ausgehend von der axialen Seitenfläche 76 des Ritzels 32a in Richtung des Ritzels 32d. Der Dämpfungskörper 74 stützt sich auch an der axialen Seitenfläche 78 des Ritzels 32d ab. Der Dämpfungskörper 74 wird über einen Presssitz zwischen dem Abschlussritzel 32a und dem Ritzel 32d gehalten. Der Dämpfungskörper 74 kontaktiert ausschließlich die axiale Seitenfläche 76 des ersten Ritzels 32a und die axiale Seitenfläche 78 des Ritzels 32d der Mehrfach-Ritzelanordnung 32.

Der Dämpfungskörper 74 erstreckt sich ausgehend von dem Abschlussritzel 32a radial innerhalb des Ritzels 32b, d. h. dem nach dem Abschlussritzel 32a nächstkleineren Ritzels 32b, und dem Ritzel 32c zu dem zweiten Ritzel 32d. Der Dämpfungskörper 74 kontaktiert die Ritzel 32b und 32c nicht.

Der Dämpfungskörper 74 ist ringförmig ausgebildet. Der Dämpfungskörper 74 weist eine vorbestimmte axiale Erstreckung auf. Der Dämpfungskörper 74 hat zwei Stirnflächen 80 und 82. Mit der Stirnflächen 80 liegt der Dämpfungskörper 74 im Bereich der Ritzelarme 40 an der axialen Seitenfläche 76 des Abschlussritzels 32a an. Mit der Stirnfläche 82 liegt der Dämpfungskörper 74 an dem Ritzel 32d an. In radialer Richtung steht der Dämpfungskörper 74 über den Innenumfang des Ritzels 32d vor.

Der Dämpfungskörper 50, 72 dient zur Verbesserung der Akustik der Mehrfach-Ritzelanordnung 30, da Schwingungen und/oder Schall mit dem Dämpfungskörper 50, 74 gedämpft werden können.

## Patentansprüche

1. Mehrfach-Ritzelanordnung (30) zur Befestigung an einer
Hinterradachsanordnung eines Fahrrads, umfassend:
- wenigstens ein erstes Ritzel (32a),
- wenigstens ein zweites Ritzel (32b, 32d), und
- wenigstens einen Dämpfungskörper (50, 74),
wobei der wenigstens eine Dämpfungskörper (50, 74) sich ausgehend von dem wenigstens einen ersten Ritzel (32a) in Richtung des wenigstens einen zweiten Ritzels (32b, 32d) erstreckt, wobei sich der wenigstens eine Dämpfungskörper (50, 74) zumindest an eine axiale Seitenfläche (70, 76) des ersten Ritzels (32a) anlegt,
**dadurch gekennzeichnet, dass**
der wenigstens eine Dämpfungskörper (50, 74) zwischen dem wenigstens einen ersten Ritzel (32a) und dem wenigstens einen zweiten Ritzel (32b, 32d) über einen Presssitz gehalten wird, wobei der wenigstens eine Dämpfungskörper (50, 74) in axialer Richtung ein Übermaß aufweist,
wobei die axiale Erstreckung des Dämpfungskörpers größer ist als ein axialer Abstand der axialen Seitenflächen des ersten Ritzels und des zweiten Ritzels.

2. Mehrfach-Ritzelanordnung (30) nach Anspruch 1,
wobei sich der wenigstens eine Dämpfungskörper (50, 74) zumindest an den einander zugewandten axialen Seitenflächen (70, 72, 76, 78) des ersten Ritzels (32a) und des zweiten Ritzels (32b, 32d) abstützt.

3. Mehrfach-Ritzelanordnung nach Anspruch 1 oder 2,
wobei der wenigstens eine Dämpfungskörper (50, 74) das wenigstens eine zweite Ritzel (32b, 32d) zumindest in radialer Richtung kontaktiert.

4. Mehrfach-Ritzelanordnung (30) nach einem der Ansprüche 1 bis 3,
wobei zumindest das erste Ritzel (32a) zur drehmomentübertragenden Kopplung der Mehrfach-Ritzelanordnung (30) mit der Hinterradachsanordnung des Fahrrads (10) ausgebildet ist.

5. Mehrfach-Ritzelanordnung (30) nach einem der Ansprüche 1 bis 4,
wobei der wenigstens eine Dämpfungskörper (50, 74) mit dem ersten Ritzel (32a) und/oder dem zweiten Ritzel (32b, 32d) dauerhaft fest verbunden ist.

6. Mehrfach-Ritzelanordnung (30) nach einem der Ansprüche 1 bis 5,
wobei das wenigstens eine erste Ritzel (32a) einen Zahnring (42), eine Koppelöffnung (36) und einen Verbindungsbereich (40) aufweist, der den Zahnring (42) mit der Koppelöffnung (36) verbindet.

7. Mehrfach-Ritzelanordnung (30) nach Anspruch 6,
wobei der wenigstens eine Dämpfungskörper (50, 74) an dem Zahnring (42) des ersten Ritzels (42) angeordnet ist.

8. Mehrfach-Ritzelanordnung (30) nach Anspruch 6,
wobei der wenigstens eine Dämpfungskörper (50, 74) in dem Verbindungsbereich (40) des ersten Ritzels (32a) angeordnet ist.

9. Mehrfach-Ritzelanordnung (30) nach einem der Ansprüche 1 bis 8,
wobei der wenigstens eine Dämpfungskörper (50, 74) ringförmig ausgebildet ist.

10. Mehrfach-Ritzelanordnung (30) nach einem der Ansprüche 1 bis 9,
wobei der wenigstens eine Dämpfungskörper (50, 74) an wenigstens einer radial äußeren Fläche und/oder an wenigstens einer radial inneren Fläche wenigstens eine Aussparung (52, 54) aufweist.

11. Mehrfach-Ritzelanordnung (30) nach einem der Ansprüche 1 bis 10,
wobei der wenigstens eine Dämpfungskörper (50, 74) aus einem Kunststoff oder aus einem Kunststoffschaum hergestellt ist.

12. Hinterradanordnung für ein Fahrrad (10) umfassend:
ein Hinterrad mit einer Hinterradachse (A), die zur Befestigung an einem Fahrradrahmen (12) ausgebildet ist,
einen an der Hinterradachse (A) drehbar gelagerten Antreiberkörper, und eine Mehrfach-Ritzelanordnung (30) nach einem der vorangehenden Ansprüche, die mit dem Antreiberkörper in einer Antriebsrichtung koppelbar ist.

## Claims

1. Multi-sprocket assembly (30) for fastening to a rear axle assembly of a bicycle, comprising:
- at least one first sprocket (32a);
- at least one second sprocket (32b, 32d); and
- at least one damping member (50, 74),
wherein the at least one damping member (50, 74), proceeding from the at least one first sprocket (32a), extends in the direction of the at least one second sprocket (32b, 32d), wherein the at least one damping member (50, 74) bears at least on an axial lateral face (70, 76) of the first sprocket (32a), **characterized in that**
the at least one damping member (50, 74) by way of a press-fit is held between the at least one first sprocket (32a) and the at least one second sprocket (32b, 32d), wherein the at least one damping member (50, 74) is oversized in the axial direction,
wherein the axial extent of the damping member is larger than an axial spacing of the axial lateral faces of the first sprocket and of the second sprocket.

2. Multi-sprocket assembly (30) according to Claim 1, wherein the at least one damping member (50, 74) is supported at least on the mutually facing axial lateral faces (70, 72, 76, 78) of the first sprocket (32a) and of the second sprocket (32b, 32d).

3. Multi-sprocket assembly according to Claim 1 or 2, wherein the at least one damping member (50, 74) contacts the at least one second sprocket (32b, 32d) at least in the radial direction.

4. Multi-sprocket assembly (30) according to one of Claims 1 to 3, wherein at least the first sprocket (32a) is configured for coupling the multi-sprocket assembly (30) in a torque-transmitting manner to the rear axle assembly of the bicycle (10).

5. Multi-sprocket assembly (30) according to one of Claims 1 to 4, wherein the at least one damping member (50, 74) is permanently fixedly connected to the first sprocket (32a) and/or the second sprocket (32b, 32d).

6. Multi-sprocket assembly (30) according to one of Claims 1 to 5, wherein the at least one first sprocket (32a) has an annular gear (42), a coupling opening (36) and a connecting region (40) which connects the annular gear (42) to the coupling opening (36).

7. Multi-sprocket assembly (30) according to Claim 6, wherein the at least one damping member (50, 74) is disposed on the annular gear (42) of the first sprocket (42).

8. Multi-sprocket assembly (30) according to Claim 6, wherein the at least one damping member (50, 74) is disposed in the connecting region (40) of the first sprocket (32a).

9. Multi-sprocket assembly (30) according to one of Claims 1 to 8, wherein the at least one damping member (50, 74) is configured so as to be annular.

10. Multi-sprocket assembly (30) according to one of Claims 1 to 9, wherein the at least one damping member (50, 74) on at least one radially outer face and/or on at least one radially inner face has at least one recess (52, 54).

11. Multi-sprocket assembly (30) according to one of Claims 1 to 10, wherein the at least one damping member (50, 74) is produced from a plastics material or from a plastic foam.

12. Rear wheel assembly for a bicycle (10), comprising:
a rear wheel having a rear wheel axle (A) which is configured for fastening to a bicycle frame (12);
a driver member which is rotatably mounted on the rear wheel axle (A), and a multi-sprocket assembly (30) according to one of the preceding claims which in a drive direction is able to be coupled to the driver member.

## Revendications

1. Agencement de pignons multiples (30) destiné à être fixé à un agencement d'essieu de roue arrière d'une bicyclette, comprenant:
- au moins un premier pignon (32a),
- au moins un deuxième pignon (32b, 32d), et
- au moins un corps d'amortissement (50, 74), l'au moins un corps d'amortissement (50, 74) s'étendant à partir de l'au moins un premier pignon (32a) en direction de l'au moins un deuxième pignon (32b, 32d), l'au moins un corps d'amortissement (50, 74) reposant au moins sur une surface latérale axiale (70, 76) du premier pignon (32a),
**caractérisé en ce que**
l'au moins un corps d'amortissement (50, 74) est maintenu entre l'au moins un premier pignon (32a) et l'au moins un deuxième pignon (32b, 32d) par l'intermédiaire d'un ajustement serré, l'au moins un corps d'amortissement (50, 74) présentant une surdimension dans la direction axiale, l'extension axiale du corps d'amortissement étant supérieure à une distance axiale des surfaces latérales axiales du premier pignon et du deuxième pignon.

2. Agencement de pignons multiples (30) selon la revendication 1, dans lequel l'au moins un corps d'amortissement (50, 74) s'appuie au moins sur les surfaces latérales axiales (70, 72, 76, 78) du premier pignon (32a) et du deuxième pignon (32b, 32d) qui se font face.

3. Agencement de pignons multiples selon la revendication 1 ou 2, dans lequel l'au moins un corps d'amortissement (50, 74) est en contact avec l'au moins un deuxième pignon (32b, 32d) au moins dans la direction radiale.

4. Agencement de pignons multiples (30) selon l'une quelconque des revendications 1 à 3, dans lequel au moins le premier pignon (32a) est configuré pour coupler l'agencement de pignons multiples (30) à l'agencement d'essieu de roue arrière de la bicyclette (10) en transmettant le couple.

5. Agencement de pignons multiples (30) selon l'une quelconque des revendications 1 à 4, dans lequel l'au moins un corps c'amortissement (50, 74) est relié de manière fixe et permanente au premier pignon (32a) et/ou au deuxième pignon (32b, 32d).

6. Agencement de pignons multiples (30) selon l'une quelconque des revendications 1 à 5, dans lequel l'au moins un premier pignon (32a) présente une bague dentée (42), une ouverture d'accouplement (36) et une zone de liaison (40) qui relie la bague dentée (42) à l'ouverture d'accouplement (36).

7. Agencement de pignons multiples (30) selon la revendication 6, dans lequel l'au moins un corps d'amortissement (50, 74) est agencé sur la bague dentée (42) du premier pignon (42).

8. Agencement de pignons multiples (30) selon la revendication 6, dans lequel l'au moins un corps d'amortissement (50, 74) est agencé dans la zone de liaison (40) du premier pignon (32a).

9. Agencement de pignons multiples (30) selon l'une quelconque des revendications 1 à 8, dans lequel l'au moins un corps d'amortissement (50, 74) est configuré sous forme annulaire.

10. Agencement de pignons multiples (30) selon l'une quelconque des revendications 1 à 9, dans lequel l'au moins un corps d'amortissement (50, 74) présente au moins un évidement (52, 54) sur au moins une surface radialement extérieure et/ou sur au moins une surface radialement intérieure.

11. Agencement de pignons multiples (30) selon l'une quelconque des revendications 1 à 10, dans lequel l'au moins un corps d'amortissement (50, 74) est fabriqué à partir d'une matière plastique ou d'une mousse de matière plastique.

12. Agencement de roue arrière pour une bicyclette (10) comprenant:
une roue arrière ayant un essieu de roue arrière (A), qui est configuré pour être fixé à un cadre de bicyclette (12),
un corps d'entraînement monté de manière rotative sur l'essieu de roue arrière (A), et un agencement de pignons multiples (30) selon l'une quelconque des revendications précédentes, qui peut être couplé au corps d'entraînement dans une direction d'entraînement.
